# EUROPÄISCHE PATENTSCHRIFT

(11) **EP 3 292 294 B1**
(45) Veröffentlichungstag und Bekanntmachung des Hinweises auf die Patenterteilung: **29.07.2020**
(21) Anmeldenummer: 16711184.8
(22) Anmeldetag: 14.03.2016
(51) Int. Cl.: F02M 25/022, F02M 25/028, F02B 47/02

(54) **WASSEREINSPRITZVORRICHTUNG EINER BRENNKRAFTMASCHINE**
WATER INJECTION DEVICE OF AN INTERNAL COMBUSTION ENGINE
DISPOSITIF À INJECTION D'EAU POUR UN MOTEUR À COMBUSTION INTERNE

(30) Priorität: 07.05.2015 DE 102015208472
(43) Veröffentlichungstag der Anmeldung: 14.03.2018
(73) Patentinhaber: Robert Bosch GmbH, 70442 Stuttgart (DE)
(72) Erfinder: OBERGFAELL, Simon, 71336 Waiblingen (DE); KNORPP, Michael, 71287 Weissach (DE); EICHENDORF, Andreas, 70374 Stuttgart (DE)
(86) Internationale Anmeldenummer: PCT/EP2016/055397
(87) Internationale Veröffentlichungsnummer: WO 2016/177497

(56) Entgegenhaltungen:
- EP-A2- 2 778 381
- DE-A1-102013 220 717
- US-A- 3 386 382
- US-A- 3 983 882
- US-A- 4 364 370
- US-A1- 2006 266 307

## Beschreibung

### Stand der Technik

Die vorliegende Erfindung betrifft eine Wassereinspritzvorrichtung einer Brennkraftmaschine sowie eine derartige Brennkraftmaschine.

Bei Brennkraftmaschinen ist es bekannt, dass mittels Wassereinspritzung eine Leistungssteigerung und/oder ein Verbrauchssenkung erreicht wird. Hierbei sind üblicherweise separate Wassereinspritzsysteme vorhanden, um die Wassereinspritzung zu ermöglichen. Ein Problemkreis ist hierbei ein mögliches Einfrieren des Wassersystems, vor allem im Fahrzeugabstellfall. Hierbei besteht die Gefahr, dass Komponenten des Wassersystems durch das gefrierende Wasser beschädigt werden.

Aus der FR 2339061 ist ein Wassereinspritzsystem bekannt, bei dem mittels einer Strahlpumpe Wasser ohne Vorhandensein eines Einspritzventils direkt in ein Saugrohr eingespritzt wird. Im Abstellfall verbleibt hierbei Wasser in der Strahlpumpe und der Wasserleitung. Allerdings ist für eine genaue Einspritzung von Wasser zur Leistungssteigerung und Verbrauchssenkung eine nichtsteuerbare Strahlpumpe wie aus dieser Druckschrift bekannt, nicht geeignet, da diese kontinuierlich Wasser einspritzt. Bei der Verwendung von normalen Wasserpumpen kann ein Schutz vor Frostschäden durch Entleeren der beteiligten Komponenten erreicht werden. Insbesondere wenn die Pumpe höher als ein Wassertank angeordnet ist, kann ein Entleeren relativ einfach erfolgen. Bei einigen Pumpentypen ergibt sich jedoch das Problem, dass diese nicht in der Lage sind, Wasser von einem niedrigeren Wasserniveau wieder neu anzusaugen. Ein Ansaugen ist dabei häufig erst dann möglich, wenn Pumpenbauteile mit Wasser benetzt sind.

EP 2 778 381 A2, US 2006/266307 A1 und US 3 983 882 A offenbaren auch ähnliche ventilgesteuerten Vorrichtungen zur Einspritzung von Wasser.

### Offenbarung der Erfindung

Die erfindungsgemäße Vorrichtung zur Einspritzung von Wasser einer Brennkraftmaschine mit den Merkmalen des Anspruchs 1 weist demgegenüber den Vorteil auf, dass ein sicheres Ansaugen unabhängig von einem Pumpentyp bei entleertem Wassersystem möglich ist. Hierbei weist die erfindungsgemäße Vorrichtung einen kostengünstigen und einfachen Aufbau auf. Erfindungsgemäß ist eine Pumpe zur Förderung von Wasser vorgesehen, welche höher als ein Wassertank angeordnet ist und mittels einer ersten Leitung mit dem Wassertank verbunden ist. Ein Wassereinspritzventil zum Einspritzen von Wasser ist mittels einer zweiten Leitung mit der Pumpe verbunden. Erfindungsgemäß ist eine Steuereinheit vorgesehen, welche eingerichtet ist, das Wassereinspritzventil unmittelbar nach einem Start der Brennkraftmaschine zu öffnen, um mittels eines vor dem Wassereinspritzventil herrschenden Unterdrucks bei einer entleerten Pumpe und entleerten Leitungen Wasser aus dem Wassertank zur Pumpe anzusaugen. Dadurch können Bauteile der Pumpe mit Wasser benetzt werden, so dass die Pumpe in der Lage ist, Wasser aus dem Wassertank anzusaugen und entsprechend mittels des Wassereinspritzventils einzuspritzen.

Die Unteransprüche zeigen bevorzugte Weiterbildungen der Erfindung. Besonders bevorzugt ist ein elektrischer Antrieb vorgesehen, um die Pumpe anzutreiben. Hierdurch kann eine einfache Ansteuerung der Pumpe realisiert werden. Ferner ermöglicht die Verwendung eines elektrischen Antriebs, dass die Pumpe immer bedarfsgerecht betrieben wird, so dass die Einspritzung von Wasser jeweils zu einem betriebsoptimalen Zeitpunkt ermöglicht wird.

Weiter bevorzugt ist die Steuereinheit eingerichtet, bei abgestellter Brennkraftmaschine das Wassereinspritzventil zu öffnen, um die erste und zweite Leitung sowie die Pumpe zu entleeren. Auf diese Weise kann eine schnelle und einfache Entleerung der Leitungen und der Pumpe ermöglicht werden. Alternativ oder zusätzlich kann die Pumpe auch rückwärts betrieben werden, um die Leitungen, insbesondere die Leitung zwischen der Pumpe und dem Wassereinspritzventil, sowie das Wassereinspritzventil und die Pumpe selbst, leer zu saugen. Erfindungsgemäß ist die Steuereinheit eingerichtet, unmittelbar nach einem Start der Brennkraftmaschine das Wassereinspritzventil zu öffnen. Dadurch kann eine Ansaugung des Wassers aus dem Wassertank mittels eines vor dem Wassereinspritzventil herrschenden Unterdrucks ermöglicht werden, so dass eine schnelle Füllung der Leitungen und der Pumpe mit Wasser und somit eine zeitnahe Förderungsmöglichkeit von Wasser vorhanden ist.

Wenn nach einem erfolgreichen Ansaugvorgang der Pumpe Bauteile der Pumpe mit Wasser benetzt sind und die Pumpe in der Lage ist, Wasser aus dem Wassertank zu fördern, ist die Steuereinheit weiter bevorzugt eingerichtet, das Wassereinspritzventil weiterhin zu öffnen oder offen zu halten, wenn vor dem Wassereinspritzventil ein Unterdruck herrscht, um den Ansaugvorgang und ein vollständiges Füllen der Pumpe und der Leitungen weiter zu unterstützen.

Vorzugsweise ist das Wassereinspritzventil höher als die Pumpe angeordnet. Somit liegt die Pumpe höher als der Wasserspiegel im Wassertank und das Einspritzventil liegt wiederum höher als die Pumpe. Beim Leersaugen des Systems durch die Pumpe könnte das Einspritzventil alternativ auch tiefer als die Pumpe liegen.

Bevorzugt ist die Steuereinheit ferner eingerichtet, die Pumpe kontinuierlich anzutreiben. Alternativ ist die Steuereinheit eingerichtet, die Pumpe in vorgegebenen Intervallen anzutreiben. Weiter alternativ ist die Steuereinheit eingerichtet, die Pumpe in Abhängigkeit von Betriebsparametern der Brennkraftmaschine einzuspritzen, um eine möglichst optimale Kraftstoffreduzierung während des Betriebs der Brennkraftmaschine zu erreichen. Betriebsparameter sind dabei z.B. Brennraumtemperatur, Beschleunigungswunsch des Fahrers (Gaspedalstellung), etc.

Die Erfindung betrifft ferner eine Brennkraftmaschine, umfassend eine erfindungsgemäße Wassereinspritzvorrichtung sowie ein Saugrohr. Dabei ist das Wassereinspritzventil der Wassereinspritzvorrichtung am Saugrohr angeordnet, um Wasser in das Saugrohr einzuspritzen.

Alternativ kann das Wassereinspritzventil auch unmittelbar am Brennraum angeordnet werden. Hierbei muss die Steuereinheit dann derart eingerichtet sein, dass bei Herrschen eines Unterdrucks im Brennraum das Wassereinspritzventil geöffnet wird, um bei entleertem Wassersystem ein Ansaugen von Wasser zur Pumpe zu ermöglichen.

### Zeichnung

Nachfolgend wird ein bevorzugtes Ausführungsbeispiel der Erfindung unter Bezugnahme auf die begleitende Zeichnung im Detail beschrieben. In der Zeichnung ist:

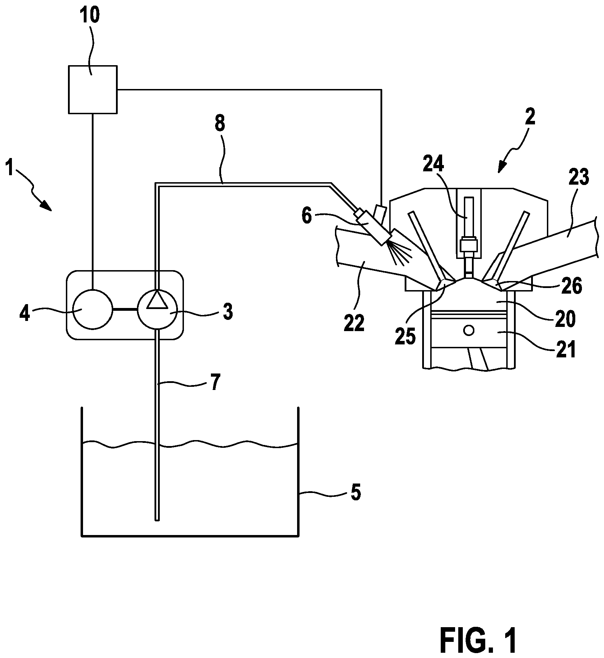

- Figur 1: eine schematische Ansicht einer Vorrichtung zur Einspritzung von Wasser gemäß einem bevorzugten Ausführungsbeispiel der Erfindung.

### Bevorzugte Ausführungsform der Erfindung

Nachfolgend wird unter Bezugnahme auf Figur 1 eine Vorrichtung 1 zur Einspritzung von Wasser einer Brennkraftmaschine 2 im Detail beschrieben.

In Figur 1 ist die Brennkraftmaschine 2 schematisch dargestellt. Die Brennkraftmaschine 2 umfasst einen Brennraum 20, in welchem ein Kolben 21 hin und her bewegbar ist. Das Bezugszeichen 22 bezeichnet ein Saugrohr, über welches Luft zum Brennraum zugeführt wird. Abgas wird über ein Abgasrohr 23 abgeführt. Hierbei sind am Saugrohr ein Einlassventil 25 und am Abgasrohr 23 ein Auslassventil 26 angeordnet. Das Bezugszeichen 24 bezeichnet ferner ein Kraftstoffeinspritzventil.

Die erfindungsgemäße Vorrichtung 1 zur Einspritzung von Wasser umfasst eine Pumpe 3 und einen elektrischen Antrieb 4 zum Antreiben der Pumpe 3. Ferner ist ein Wassertank 5 vorgesehen, welcher durch eine erste Leitung 7 mit der Pumpe 3 verbunden ist.

Wie aus Figur 1 ersichtlich ist, ist die Pumpe 3 höher als der Wassertank 5 und somit über dem Wasserspiegel im Wassertank angeordnet.

Eine zweite Leitung 8 verbindet die Pumpe 3 mit einem Wassereinspritzventil 6. Wie aus Figur 1 ersichtlich ist, ist das Wassereinspritzventil 6 ebenfalls höher als der Wassertank 5 und auch höher als die Pumpe 3 angeordnet.

Das Wassereinspritzventil 6 ist am Saugrohr 22 der Brennkraftmaschine 2 angeordnet und spritzt Wasser in das Saugrohr 22 ein.

Während des normalen Betriebes wird die Pumpe 3 mittels einer Steuereinheit 10 über den elektrischen Antrieb 4 angetrieben. Die Steuereinheit 10 öffnet und schließt auch das Wassereinspritzventil 6. Dadurch kann eine gesteuerte Wassereinspritzung in das Saugrohr ermöglicht werden.

In einem Abstellfall der Brennkraftmaschine 2 wird erfindungsgemäß nun ein Entleeren der beiden Leitungen 7, 8, der Pumpe 3 und des Wassereinspritzventils 6 vorgenommen. Da die Pumpe 3 höher als der Wassertank 5 angeordnet ist und das Einspritzventil 6 ebenfalls höher als die Pumpe 3 angeordnet ist, kann ein Entleeren schon zum Großteil durch einfaches Öffnen des Wassereinspritzventils 6 ermöglicht werden. Gegebenenfalls strömt dabei ein kleiner Teil Wasser in das Saugrohr 22, was jedoch kein Problem darstellt, da aufgrund des Betriebs der Brennkraftmaschine noch hohe Temperaturen im Saugrohr herrschen, so dass das eintropfende Wasser sofort verdunstet.

Zur Unterstützung der Entleerung der Leitungen 7 und 8 und des Wassereinspritzventils 6 kann die Steuereinheit 10 die Pumpe 3 auch rückwärts betreiben. Hierdurch kann ein schnelleres Entleeren ermöglicht werden. Die entleerten Leitungen 7, 8 und das entleerte Wassereinspritzventil 6 sowie die entleerte Pumpe 3 sind somit vor einem Gefrieren im Abstellfall der Brennkraftmaschine geschützt. In diesem Fall könnte das Wassereinspritzventil 6 auch niedriger als die Pumpe angeordnet werden.

Wenn nun bei entleerter Wassereinspritzvorrichtung ein Neustart der Brennkraftmaschine 2 erfolgt, kann erfindungsgemäß durch die Steuereinheit 10 ein Ansaugen von Wasser aus dem Wassertank 5 erst ermöglicht bzw. unterstützt werden. Abhängig von Pumpentyp der Pumpe 3 kann die Pumpe 3 eventuell nicht selbst ansaugen oder nur, falls Pumpenkomponenten mit Wasser benetzt sind. In diesem Fall öffnet die Steuereinheit 10 das Wassereinspritzventil 6. Aufgrund der gestarteten Brennkraftmaschine 2 herrscht im Saugrohr 2 ein Unterdruck. Durch das geöffnete Wassereinspritzventil 6 wird aufgrund des Unterdrucks im Saugrohr 22 Wasser aus dem Wassertank 5 in die erste Leitung 7 angesaugt und zur Pumpe 3 angesaugt. Währenddessen wird die Pumpe 3 betrieben, so dass nach einer gewissen Zeit und einer vorbestimmten Menge von angesaugtem Wasser über die erste Leitung 7 zur Pumpe 3 ein selbsttätiges Ansaugen der Pumpe 3 ermöglicht wird. Hierbei kann entweder das Wassereinspritzventil 6 geschlossen werden oder alternativ kann das Wassereinspritzventil 6 weiterhin geöffnet bleiben, um den Ansaugvorgang weiter zu unterstützen und eine schnellere Befüllung der Wassereinspritzvorrichtung mit Wasser ermöglicht werden.

Somit kann erfindungsgemäß eine beliebige Pumpe zur Förderung von Wasser für die Wassereinspritzvorrichtung verwendet werden. Insbesondere können auch kostengünstige Pumpen verwendet werden, welche nicht selbsttätig ansaugen können. Da die Ansaugunterstützung unmittelbar nach einem Start der Brennkraftmaschine erfolgt, ist die Vorrichtung zur Einspritzung von Wasser auch schnell einsatzbereit. Hierdurch wird ein zu großer unnötiger Kraftstoffverbrauch, welcher ohne Wassereinspritzung vorhanden ist, minimiert. Dabei weist die erfindungsgemäße Vorrichtung 1 einen sehr einfachen und kostengünstigen Aufbau auf. Nach erfolgreichem Ansaugen von Wasser kann die Steuereinheit 10 dann in Abhängigkeit von verschiedensten Parametern die Wassereinspritzung in das Saugrohr 22 vornehmen.

## Patentansprüche

1. Vorrichtung zur Einspritzung von Wasser einer Brennkraftmaschine, umfassend:
- einen Wassertank (5) zur Speicherung von Wasser;
- eine Pumpe (3) zur Förderung des Wassers, wobei die Pumpe (3) höher als der Wassertank (5) angeordnet ist und mittels einer ersten Leitung (7) mit dem Wassertank verbunden ist,
- ein Wassereinspritzventil (6) zum Einspritzen von Wasser, welches mittels einer zweiten Leitung (8) mit der Pumpe (3) verbunden ist,
- einen Antrieb (4) zum Antreiben der Pumpe (3), und
- eine Steuereinheit (10), **dadurch gekennzeichnet, dass** die Steuereinheit (10) eingerichtet ist, als eine Ansaugunterstützung, das Wassereinspritzventil (6) zu öffnen, um mittels eines vor dem Wassereinspritzventil (6) herrschenden Unterdrucks bei entleerten Leitungen und entleerter Pumpe Wasser aus dem Wassertank (5) zur Pumpe (3) anzusaugen, wobei diese Ansaugunterstützung unmittelbar nach einem Start der Brennkraftmaschine erfolgt.

2. Vorrichtung nach Anspruch 1, **dadurch gekennzeichnet, dass** der Antrieb (4) ein elektrischer Antrieb ist.

3. Vorrichtung nach einem der vorhergehenden Ansprüche, **dadurch gekennzeichnet,**
**dass** die Steuereinheit (10) eingerichtet ist, bei abgestellter Brennkraftmaschine das Wassereinspritzventil (6) zu öffnen, um die erste und zweite Leitung (7, 8), die Pumpe (3) und das Wassereinspritzventil (6) zu entleeren.

4. Vorrichtung nach Anspruch 3, **dadurch gekennzeichnet, dass** die Steuereinheit (10) eingerichtet ist, die Entleerung der ersten und zweiten Leitung (7, 8), der Pumpe (3) und des Wassereinspritzventils (6) unmittelbar nach jedem Abstellen der Brennkraftmaschine durchzuführen.

5. Vorrichtung nach einem der vorhergehenden Ansprüche, **dadurch gekennzeichnet, dass** die Steuereinheit (10) eingerichtet ist, die Pumpe (3) rückwärts zu betreiben, um die Entleerung der ersten und zweiten Leitung (7, 8) sowie des Wassereinspritzventils (6) und der Pumpe (3) durchzuführen.

6. Vorrichtung nach einem der vorhergehenden Ansprüche, **dadurch gekennzeichnet, dass** die Steuereinheit (10) eingerichtet ist, unmittelbar nach einem Start der Brennkraftmaschine das Wassereinspritzventil (6) zu öffnen.

7. Vorrichtung nach einem der vorhergehenden Ansprüche, **dadurch gekennzeichnet, dass** die Steuereinheit (10) eingerichtet ist, nach einem erfolgreichen Ansaugvorgang der Pumpe (3) das Wassereinspritzventil (6) weiter zu öffnen, wenn vor dem Wassereinspritzventil (6) ein Unterdruck herrscht, um den Ansaugvorgang der Pumpe (3) weiter zu unterstützen.

8. Vorrichtung nach einem der vorhergehenden Ansprüche, **dadurch gekennzeichnet, dass** das Wassereinspritzventil (6) höher als die Pumpe (3) angeordnet ist.

9. Vorrichtung nach einem der vorhergehenden Ansprüche, **dadurch gekennzeichnet, dass** die Steuereinheit (10) eingerichtet ist, die Pumpe (3) kontinuierlich anzutreiben oder die Pumpe (3) in vorgegebenen Intervallen anzutreiben oder die Pumpe (3) in Abhängigkeit von verschiedensten Betriebsparametern der Brennkraftmaschine anzutreiben.

10. Brennkraftmaschine, umfassend eine Vorrichtung (1) nach einem der vorhergehenden Ansprüche und ein Saugrohr (22), wobei das Wassereinspritzventil (6) am Saugrohr (22) angeordnet ist, um Wasser in das Saugrohr (22) einzuspritzen.

## Claims

1. Device for injecting water of an internal combustion engine, comprising:
- a water tank (5) for storing water;
- a pump (3) for conveying the water, wherein the pump (3) is arranged higher than the water tank (5) and is connected by means of a first line (7) to the water tank,
- a water injection valve (6) for injecting water which is connected by means of a second line (8) to the pump (3),
- a drive (4) for driving the pump (3), and
- a control unit (10), **characterized in that** the control unit (10) is configured to, as a means of priming assistance, open the water injection valve (6) in order, by means of a negative pressure prevailing upstream of the water injection valve (6) in the case of evacuated lines and an evacuated pump, draw water in from the water tank (5) to the pump (3), wherein this priming assistance is performed immediately after a start of the internal combustion engine.

2. Device according to Claim 1, **characterized in that** the drive (4) is an electric drive.

3. Device according to any of the preceding claims, **characterized in that** the control unit (10) is configured to, when the internal combustion engine has been shut down, open the water injection valve (6) in order to evacuate the first and second line (7, 8), the pump (3) and the water injection valve (6).

4. Device according to Claim 3, **characterized in that** the control unit (10) is configured to perform the evacuation of the first and second line (7, 8), of the pump (3) and of the water injection valve (6) immediately after every shutdown of the internal combustion engine.

5. Device according to any of the preceding claims, **characterized in that** the control unit (10) is configured to operate the pump (3) in reverse in order to perform the evacuation of the first and second line (7, 8) and of the water injection valve (6) and of the pump (3).

6. Device according to any of the preceding claims, **characterized in that** the control unit (10) is configured to open the water injection valve (6) immediately after a start of the internal combustion engine.

7. Device according to any of the preceding claims, **characterized in that** the control unit (10) is configured to, after a successful priming process of the pump (3), open the water injection valve (6) further, if a negative pressure prevails upstream of the water injection valve (6), in order to further assist the priming process of the pump (3).

8. Device according to any of the preceding claims, **characterized in that** the water injection valve (6) is arranged higher than the pump (3).

9. Device according to any of the preceding claims, **characterized in that** the control unit (10) is configured to continuously drive the pump (3) or to drive the pump (3) at predefined intervals or to drive the pump (3) in a manner dependent on a wide variety of different operating parameters of the internal combustion engine.

10. Internal combustion engine, comprising a device (1) according to any of the preceding claims and comprising an intake pipe (22), wherein the water injection valve (6) is arranged at the intake pipe (22) in order to inject water into the intake pipe (22).

## Revendications

1. Dispositif d'injection d'eau d'un moteur à combustion interne, comprenant :
- un réservoir d'eau (5) pour stocker de l'eau ;
- une pompe (3) pour refouler l'eau, la pompe (3) étant disposée plus haut que le réservoir d'eau (5) et étant reliée au réservoir d'eau au moyen d'une première conduite (7),
- une soupape d'injection d'eau (6) pour injecter de l'eau, laquelle est reliée à la pompe (3) au moyen d'une deuxième conduite (8),
- un entraînement (4) pour entraîner la pompe (3), et
- une unité de commande (10),
**caractérisé en ce que** l'unité de commande (10) est prévue en tant qu'assistance d'aspiration pour ouvrir la soupape d'injection d'eau (6) afin d'aspirer de l'eau hors du réservoir d'eau (5) vers la pompe (3) au moyen d'une dépression régnant devant la soupape d'injection d'eau (6) lorsque les conduites sont vidées et que la pompe est vidée, cette assistance d'aspiration s'effectuant immédiatement après un démarrage du moteur à combustion interne.

2. Dispositif selon la revendication 1, **caractérisé en ce que** l'entraînement (4) est un entraînement électrique.

3. Dispositif selon l'une quelconque des revendications précédentes, **caractérisé en ce que** l'unité de commande (10) est prévue pour ouvrir la soupape d'injection d'eau (6) lorsque le moteur à combustion interne est arrêté, afin de vider la première et la deuxième conduite (7, 8), la pompe (3) et la soupape d'injection d'eau (6).

4. Dispositif selon la revendication 3, **caractérisé en ce que** l'unité de commande (10) est prévue pour effectuer la vidange de la première et de la deuxième conduite (7, 8), de la pompe (3) et de la soupape d'injection d'eau (6) immédiatement après chaque arrêt du moteur à combustion interne.

5. Dispositif selon l'une quelconque des revendications précédentes, **caractérisé en ce que** l'unité de commande (10) est prévue pour faire fonctionner la pompe (3) en sens inverse afin d'effectuer la vidange de la première et de la deuxième conduite (7, 8) ainsi que de la soupape d'injection d'eau (6) et de la pompe (3).

6. Dispositif selon l'une quelconque des revendications précédentes, **caractérisé en ce que** l'unité de commande (10) est prévue pour ouvrir la soupape d'injection d'eau (6) immédiatement après un démarrage du moteur à combustion interne.

7. Dispositif selon l'une quelconque des revendications précédentes, **caractérisé en ce que** l'unité de commande (10) est prévue pour ouvrir davantage la soupape d'injection d'eau (6) après avoir effectué une opération d'aspiration de la pompe (3), lorsqu'une dépression règne en amont de la soupape d'injection d'eau (6), afin d'assister davantage l'opération d'aspiration de la pompe (3) .

8. Dispositif selon l'une quelconque des revendications précédentes, **caractérisé en ce que** la soupape d'injection d'eau (6) est disposée plus haut que la pompe (3).

9. Dispositif selon l'une quelconque des revendications précédentes, **caractérisé en ce que** l'unité de commande (10) est prévue pour faire fonctionner la pompe (3) en continu ou pour entraîner la pompe (3) à intervalles prédéfinis ou pour entraîner la pompe (3) en fonction de paramètres de fonctionnement très différents du moteur à combustion interne.

10. Moteur à combustion interne comprenant un dispositif (1) selon l'une quelconque des revendications précédentes et un tuyau d'aspiration (22), la soupape d'injection d'eau (6) étant disposée au niveau du tuyau d'aspiration (22) afin d'injecter de l'eau dans le tuyau d'aspiration (22).
